## Europäisches Patentamt

(19) **European Patent Office**

Office européen des brevets

(11) Publication number: **0 046 603**
**A1**

(12) # EUROPEAN PATENT APPLICATION

(21) Application number: **81106681.0**

(22) Date of filing: **27.08.81**

(51) Int. Cl.³: **C 25 B 9/00**
**C 02 F 1/76, C 25 B 15/08**

(30) Priority: **27.08.80 ZA 805314**

(43) Date of publication of application:
**03.03.82 Bulletin 82/9**

(84) Designated Contracting States:
**AT BE CH DE FR GB IT LI LU NL SE**

(71) Applicant: **Chauvier, Fernand Louis Oscar Joseph**
**7 Caribou Road**
**Selcourt Springs(ZA)**

(72) Inventor: **Chauvier, Fernand Louis Oscar Joseph**
**7 Caribou Road**
**Selcourt Springs(ZA)**

(74) Representative: **Wey, Hans-Heinrich, Dipl.-Ing. et al,**
**Patentanwälte Müller-Börner Wey & Körner**
**Widenmayerstrasse 49**
**D-8000 München 22(DE)**

(54) An apparatus for producing chlorine by electrolysis.

(57) An apparatus for producing chlorine by electrolysis of brine has an anode compartment (12) with an anode (14), a cathode compartment (16) with a cathode (17), and an ion permeable membrane (20) separating the two compartments. The anode compartment is supplied with brine from a supply chamber (22) via a pipe (24). There is circulation of brine between the anode compartment (12) and the supply chamber (22) via a return pipe (34), and a pump (28) operated by chlorine gas generated in the anode compartment (12). The pump (28) comprises a cylinder (30) with a capillary tube (32) therein. The chlorine gas pushes a plug of brine up the tube (32) which flows into the cylinder (30) and into the return pipe (34). Make-up water is supplied via a level control valve (60) which maintains the level of brine in the supply chamber (22), the anode compartment (12), the tube (32) and the cylinder (30) at the level indicated (68). Chlorine gas passes into a collection chamber (38) via a pipe (40). The cathode compartment (16) is supplied separately with water via a further control valve (62) and pipe (46). Sodium hydroxide generated in the cathode compartment (16) is pumped out of the cathode compartment (16) by a pump (50) similar to the anode pump (28) operated by hydrogen that is generated. Water with the sodium hydroxide therein is pumped into the collection chamber (38) and the hydrogen is vented to the atmosphere via an opening (58).

FIG. 4

THIS INVENTION relates to an apparatus for producing chlorine gas by electrolysis, the apparatus being particularly usable as a chlorinator for swimming pools and the like.

According to the invention there is provided an apparatus for producing chlorine by electrolysis of brine, which includes

an anode compartment in which an anode is receivable;

a supply chamber for containing a supply of brine;

a feed flow path defining means defining a feed flow path between the supply chamber and the anode compartment for supplying brine from the supply chamber to the anode compartment;

a return flow path defining means defining a return flow path between the anode compartment and the supply chamber for returning brine from the anode compartment to the supply chamber; and

a circulation means for circulating brine between the anode compartment and the supply chamber via the feed and return flow paths.

0046603

The circulation means may be a pump means, which may particularly be operable by chlorine gas produced in the anode compartment. Thus, the anode compartment may have a gas outlet opening, with the pump means being located at the outlet. In one particular form, the pump means may comprise a tube of suitably small cross-sectional area for liquid therein to maintain its meniscus, the tube having an inlet and an outlet end. The inlet end will be in communication with the anode compartment and, in use, the static brine level will be maintained between the inlet and the outlet ends of the tube. Thus, there will be a plug of liquid in the tube which will be pushed up through the tube due to the pressure of chlorine gass produced in the anode compartment. This plug of liquid, once it has been discharged from the tube, may then flow back to the supply chamber via the return path, due to gravitational action. This will thus cause circulation of liquid between the supply chamber and the anode compartment.

The gas outlet opening of the anode compartment may also communicate with a collection chamber in which chlorine that has passed through the pump means collects.

The apparatus will naturally have a cathode. Thus the apparatus may also include a cathode compartment in which the cathode is receivable. A suitable ion permeable membrane may then be provided between the anode and cathode compartments for physically separating the two compartments whilst maintaining them in electrolytic communication with one another.

One of the major problems associated with electrolysis apparatus utilizing sodium chloride and water to produce chlorine gass is the removal of sodium hydroxide produced thereby. The apparatus of the invention may thus have a further pump means for pumping liquid out of the cathode compartment, thereby removing the sodium hydroxide therefrom. This further pump means may also be pressure operated by means of hydrogen liberated in the cathode compartment. This further pump means may be similar to the pump means for the anode compartment.

The cathode compartment may have a first outlet through which the liquid is discharged and a second outlet through which hydrogen gass is discharged. This second outlet may be open to the atmosphere.

The liquid that is pumped from the cathode compartment which is rich in sodium hydroxide, may also be pumped into the collection chamber via the first outlet of the cathode compartment. As it is desirable not to mix chlorine and hydrogen, a separating means may be provided for separating the hydrogen from the liquid that is pumped into the collection chamber. Further, a one-way valve or a liquid lock may be provided between the further pump means and the collection chamber to inhibit flow of chlorine gass from the collection chamber into a region where it can mix with the hydrogen.

The apparatus may be connectable to a  water supply source, to provide make-up water to the anode and cathode compartments.  Water may be supplied to these compartments via control valves which act to maintain the static liquid level at a predetermined value.

The collection chamber may be in communication with a fluid flow line via a control valve, the control valve being operable by a diaphragm displaceable by gas pressure in the chamber to permit such gas to enter the fluid flow line.  At the same time, the sodium hydroxide may also be fed into the fluid flow line.

The fluid flow line into which the chlorine gas and sodium hydroxide are discharged may be part of a swimming pool filtering circuit through which water of the pool is circulated. The apparatus may thus in affect be a chlorinator for chlorinating the water in swimming pools or the like.  The connection chamber may accordingly include connector means for connecting an outlet thereof to a pipe that is connectable between the inlet ad outlet of a pump forming part of the filtering circuit.  The pool may also be utilized as a supply of make-up water.

The apparatus of the invention requires minimal or no maintenance for extended periods of time and the only care that must be taken is that the supply chamber must contain sufficient salt for the electrolysis process.  Since the sodium hydroxide is also fed into the swimming pool water, the efficiency of the electrolysis process remains high and it is not required to remove concentrated volumes of sodium hydroxide from the apparatus to ensure such efficiency.

The invention is now described, by way of example, with reference to the accompanying drawings in which :-

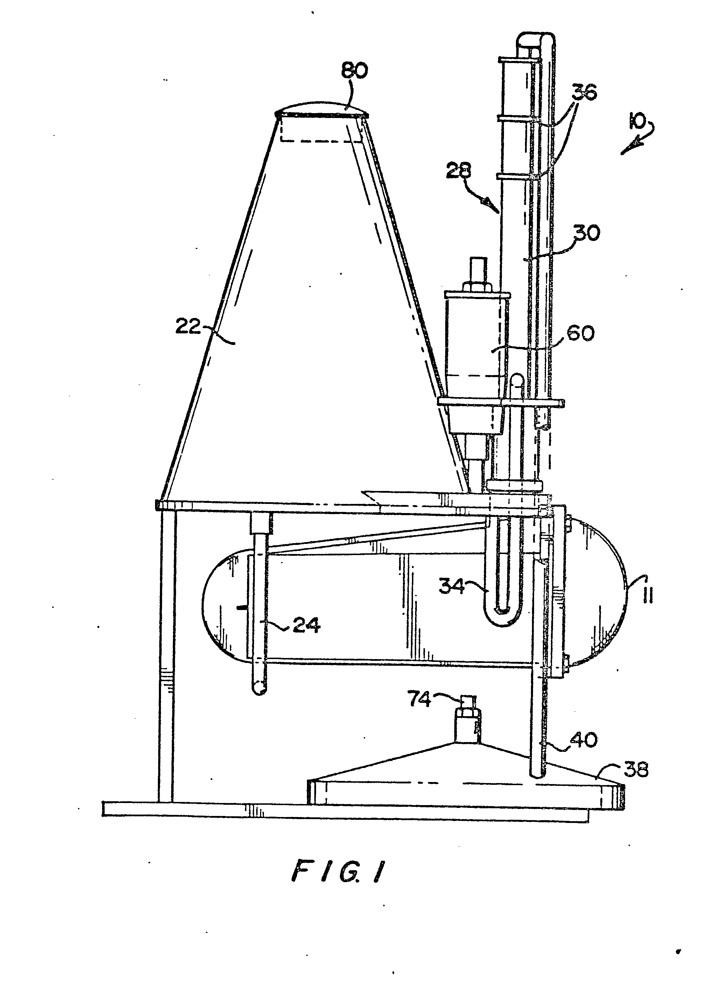

Figure 1 shows a front view of electrolysis apparatus in accordance with the invention;

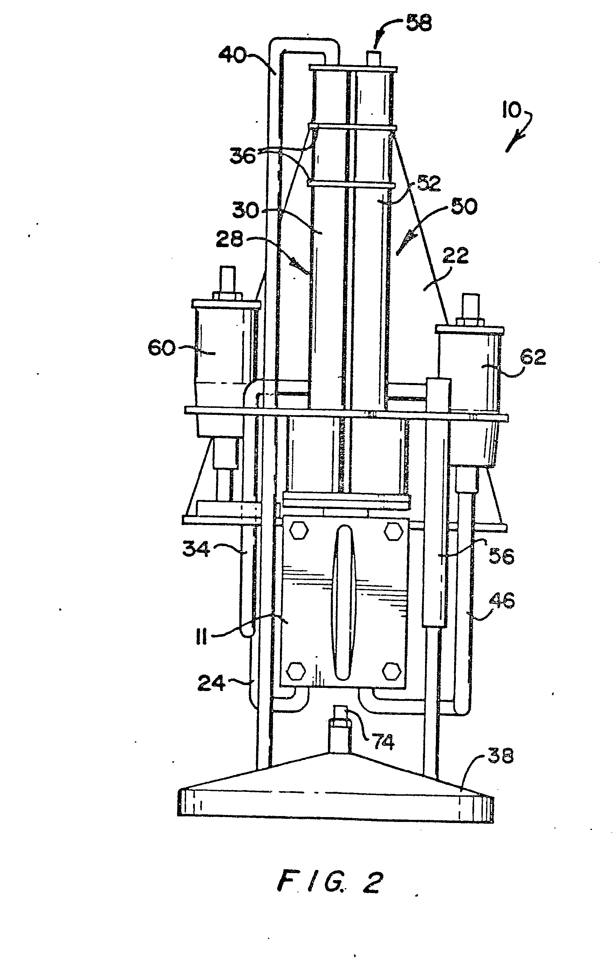

Figure 2 shows a side view from the right in Figure 1, of the apparatus;

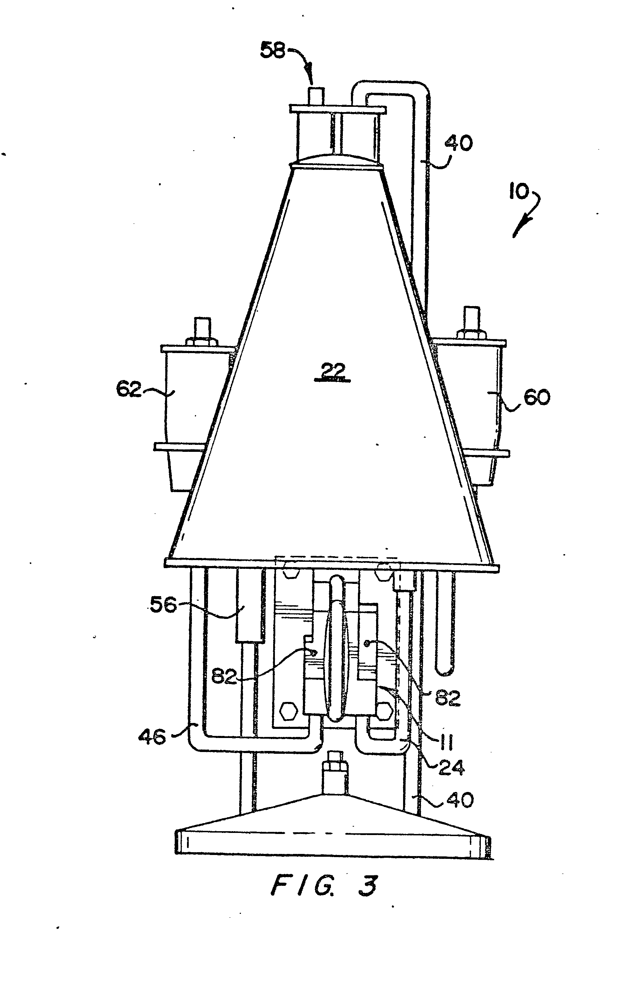

Figure 3 shows a side view of the apparatus from the other side;

Figure 4 shows scematically the operation and construction of the apparatus;

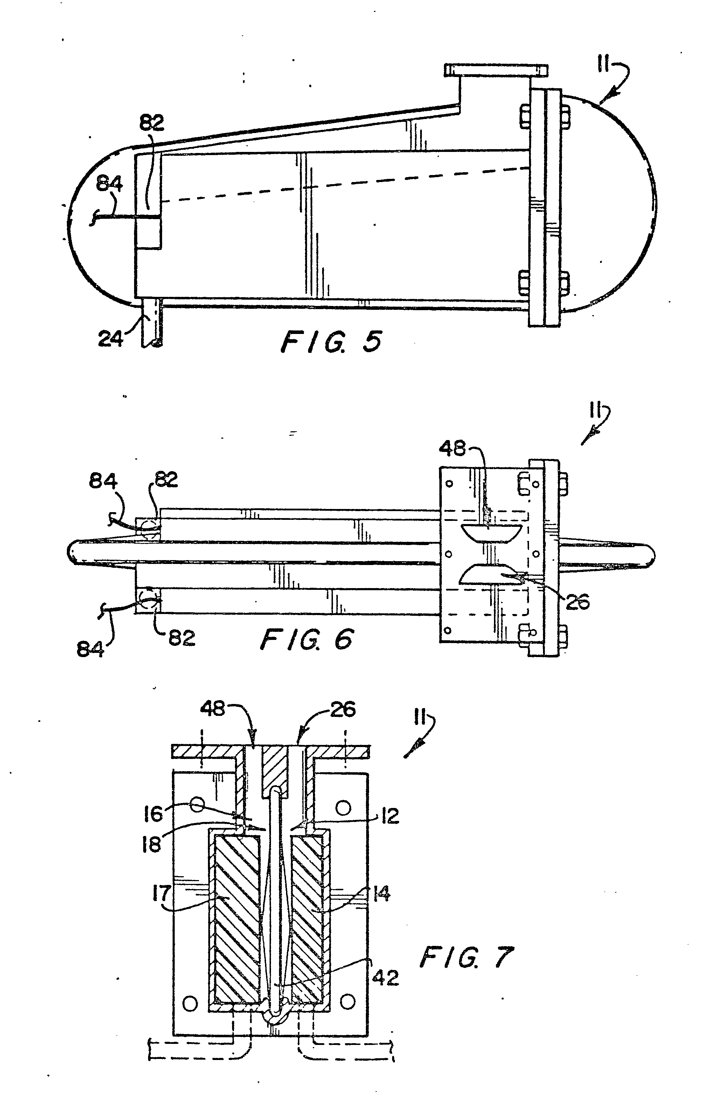

Figure 5 shows a side view of the electrolytic cell forming part of the apparatus;

Figure 6 shows a plan view of the electrolytic cell;

Figure 7 shows a sectional view of the cell;

Figure 8 shows a sectional view of control valves forming part of the apparatus;  and

Figure 9 shows a sectional view of a collection chamber forming part of the apparatus.

Referring to the drawings an apparatus for producing chlorine gas by electrolysis in accordance with the invention, to be used as a chlorinator for a swimming pool, is generally indicated by the reference numeral 10. The apparatus 10 includes an electrolytic cell 11 having an anode compartment 12 with an anode 14 disposed therein and a cathode compartment 16 having a cathode 17 disposed therein. The compartments 12 and 16 are in communication with one another via an aperture 18 having an ion permeable membrane 20 extending across the aperture 18. The membrane 20 is a perfluorosulphonic acid membrane such as that marketed by Du Pont under the Trade Mark "Nafion-reinforced No. 324". A supply chamber 22 is disposed adjacent the anode compartment 12 and is in communication therewith via a feed pipe 24.

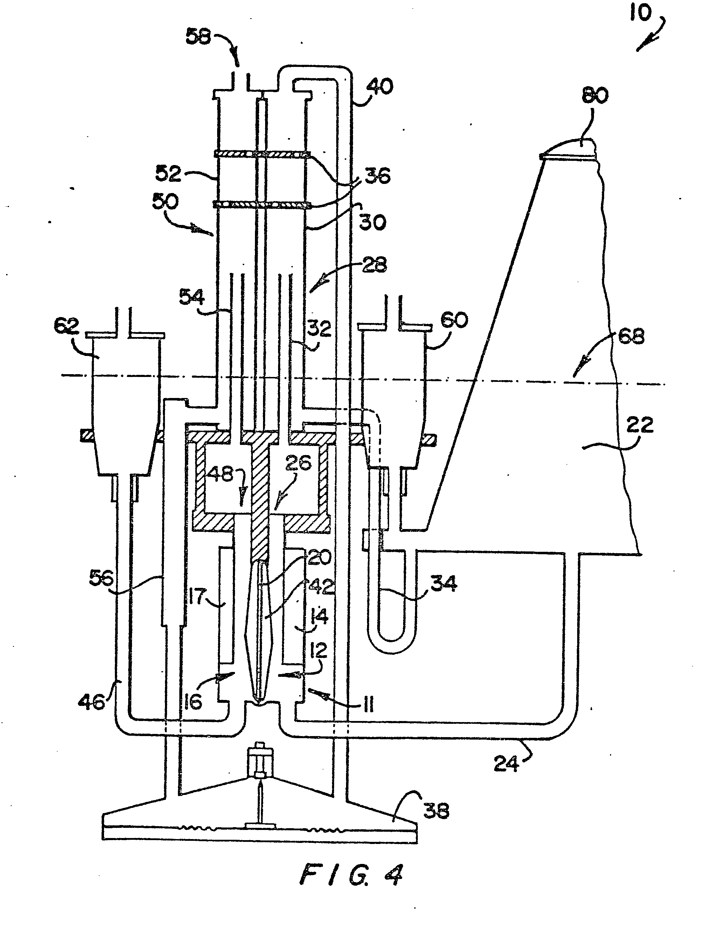

The anode compartment 12 has an outlet 26 at its upper end, through which chlorine produced, in use, by electrolysis passes. This opening 26 is in communication with the lower end of a first pump arrangement 28. The first pump arrangement 28 comprises a cylinder 30 in which is located a pumping tube 32. The pumping tube 32 has a suitably small cross-sectional area so that water therein retains its meniscus. As is seen most clearly in Figure 4, the cylinder 30 is closed at its lower end with the bottom end of the tube 32 extending therethrough. Further, at its lower end, the cylinder 30 is connected to one end of a return pipe 34, the other end of which is connected to the supply chamber 22. Within the cylinder 30 there are two drying baffles 36.

The upper end of the cylinder 30 is connected to a collection chamber 38 via a pipe 40.

It is to be noted that the membrane 20 is held in a membrane holder 42.

The cathode compartment 16 is similar to the anode compartment 12, in that it is supplied with water via a supply pipe 46 and has an upper outlet opening 48 communicating with a second pump means 50. The pump means 50 is similar to the pump means 38, having a cylinder 52 and pumping tube 54 identical to the cylinder 30 and pumping tube 32. However, the liquid outlet of the pump 50 leads to the collecting chamber 38 via a pipe 56 and the upper end of the cylinder 50 is open to the atmosphere via opening 58.

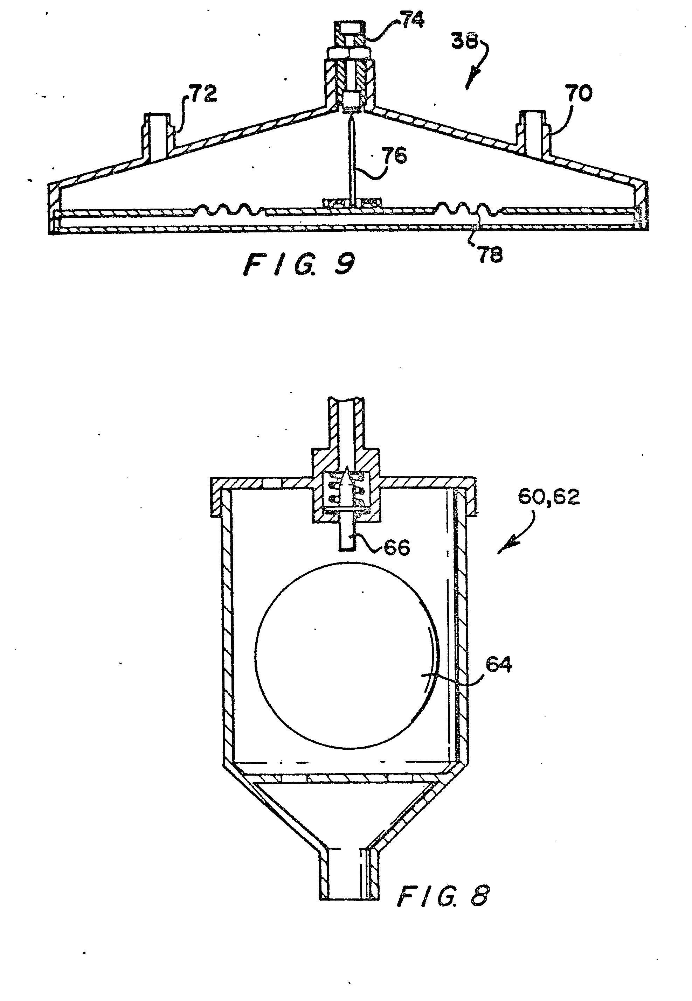

Water is supplied to the supply chamber 22 and to the cathode compartment 16 via float operated level control valves 60 and 62 respectively. The valves 60 and 62 are shown more clearly in Figure 8. As is seen in Figure 8, the valves 60, 62 have a ball 64 which engages a needle valve 66. The valves 60 and 62 are such as to maintain the liquid at the level indicated by line 68.

The collecting chamber 38 is also shown in more detail in Figure 9. As shown, it has connectors 70 and 72 for the pipes 40 and 56 respectively. It also has an outlet 74 which is controlled by a needle valve 76. The needle 76 is connected to a diaphragm 78. It will thus be appreciated that when the

0046603

pressure within the collecting chamber 38 increases sufficiently the needle valve 76 is displaced downwardly thereby opening the outlet 74 and allowing material within the chamber 38 to pass out through the outlet 74.

In use, the valves 60 and 62 are connected to a supply of water and sodium chloride is placed in the supply chamber 22 via a removable cover 80. Water flows, via the valve 60, into the supply chamber 22 the anode compartment 12 and the tube 32. Similarly, water flows via the valve 62 into the cathode compartment 16 and up the tube 54. In order to prevent the passage of hydrogen generated in the cathode compartment 16 into the collecting chamber 38, water is poured into the cylinder 32 via its opening 58, so as to fill the collecting chamber 38 and the pipe 56 with water. It will be appreciated that salt in the supply chamber 22 dissolves in the water so that the anode compartment 12 is filled with brine. DC power is then supplied to the anode 14 and the cathode 17 via terminals 82 and cables 84. As a result of electrolysis, chlorine is produced in the anode compartment 12 and hydrogen and sodium hydroxide are produced in the cathode compartment 16. As the pressure of chlorine builds up in the cathode compartment 12 the plug of brine in the tube 32 is pushed up the tube 32 and eventually flows into the cylinder 30. This causes circulation of brine through the tube 34, into the supply chamber 22 and back into the anode compartment 12 via the pipe 24. The chlorine gass passes up the cylinder 30 and through the pipe 40 into the collecting chamber 38.

In the cathode compartment 16, hydrogen gas is liberated, causing a similar plug of water with sodium hydroxide dissolved therein to move up the tube 54. The liquid flows down the cylinder 52 and into the collecting chamber 38 via the pipe 56. The hydrogen is vented to the atmosphere via the opening 58. When pressure in the collecting chamber 48 has built up sufficiently, the needle 76 is suitable displaced by the diaphragm 78 and water with sodium hydroxide and chlorine (both in dissolved and gaseous form) pass out through the outlet 74. This outlet 74 is then connected to a swimming pool or the like via suitable conduits.

CLAIMS

1.      An apparatus for producing chlorine by electrolysis of brine, which includes

an anode compartment in which an anode is receivable;

a supply chamber for containing a supply of brine;

a feed flow path defining means defining a feed flow path between the supply chamber and the anode compartment for supplying brine from the supply chamber to the anode compartment;

a return flow path defining means defining a return flow path between the anode compartment and the supply chamber for returning brine from the anode compartment to the supply chamber; and

a circulation means for circulating brine between the anode compartment and the supply chamber via the feed and return flow paths.

2.      An apparatus as claimed in Claim 1, in which the circulation means is a pump means.

3.      An apparatus as claimed in Claim 2, in which the pump means is operable by chlorine gas produced in the anode compartment.

4.      An apparatus as claimed in Claim 3 in which the anode compartment has a gas outlet opening and the pump means is located at the outlet.

5.      An apparatus as claimed in Claim 4, in which the pump means has a tube of suitably small cross-sectional area for liquid therein to maintain its meniscus.

6.      An apparatus as claimed in Claim 5, in which the tube has an inlet and an outlet end, with the inlet end in communication with the anode compartment and with the inlet end being, in use, below the outlet end and in which the apparatus includes a connection means for connecting the supply chamber to a water supply and a static brine level maintaining means for maintaining the static level of the brine between the inlet and outlet ends of the tube.

7.      An apparatus as claimed in Claim 1, which includes a chlorine collection chamber in communication with the anode compartment.

8.      An apparatus as claimed in Claim 2, which includes a cathode compartment in which a cathode is receivable and a suitable ion permeable membrane, the anode and cathode compartments being in electrolytic communication with one another via the membrane.

9.      An apparatus as claimed in Claim 8, which includes a further pump means for pumping liquid out of the cathode compartment.

10.     An apparatus as claimed in Claim 9, in which the further pump means is operable by hydrogen gas generated in use in the cathode compartment.

11.       An apparatus as claimed in Claim 9, in which the cathode compartment has a first outlet through which liquid is, in use, discharged and a second outlet through which hydrogen gas generated in use in the cathode compartment is discharged.

12.       An apparatus as claimed in Claim 11, in which the first outlet is connected to a collection chamber.

13.       An apparatus as claimed in Claim 8, which includes a connection means for connecting the cathode compartment to a supply of water.

14.       An apparatus as claimed in Claim 1, which has an anode in the anode compartment.

15.       An apparatus as claimed in Claim 8, which has a cathode in the cathode compartment.

FIG. 1

F I G. 2

0046603

FIG. 3

FIG. 4

FIG. 5

FIG. 6

FIG. 7

0046603

FIG. 9

FIG. 8

# EUROPEAN SEARCH REPORT

European Patent Office

| | Application number |
|---|---|
| | EP 81 10 6681 |

## DOCUMENTS CONSIDERED TO BE RELEVANT

| Category | Citation of document with indication, where appropriate, of relevant passages | Relevant to claim |
|---|---|---|
| | GB - A - 1 435 503 (INTERNATIONAL RESEARCH & DEVELOPMENT CO.) <br><br> * page 2, lines 26-40; figure 2 * | 1,2 |
| | EP - A - 0 002 783 (KURTZ) <br><br> * page 13, claims 1-5; figure * | 3,4,5 |
| | GB - A - 948 287 (KREBS) <br><br> * page 1, lines 67-86; page 2, lines 1-26; figures 1,4 * | 1,2,3 |
| A | CH - A - 468 310 (O. PAUSER) | |
| A | US - A - 4 129 493 (M.R. TIGHE) <br><br> ----- | 8,14, 15 |

### CLASSIFICATION OF THE APPLICATION (Int. Cl.³)

C 25 B   9/00
C 02 F   1/76
C 25 B   15/08

### TECHNICAL FIELDS SEARCHED (Int. Cl.³)

C 25 B   9/00
           15/08
C 02 F   1/76

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family
corresponding document

The present search report has been drawn up for all claims

| Place of search | Date of completion of the search | Examiner |
|---|---|---|
| The Hague | 24-11-1981 | GROSEILLER |

EPO Form 1503.1   06.78